Europäisches Patentamt

European Patent Office

Office européen des brevets

(11) Publication number: **0 169 713**
**A2**

# (12) EUROPEAN PATENT APPLICATION

(21) Application number: **85305145.6**

(22) Date of filing: **18.07.85**

(51) Int. Cl.⁴: **H 04 L 5/14**
**H 04 B 1/66**

(30) Priority: **25.07.84 GB 8418935**

(43) Date of publication of application:
**29.01.86 Bulletin 86/5**

(84) Designated Contracting States:
**DE FR GB SE**

(71) Applicant: **RACAL RESEARCH LIMITED**
**Western Road**
**Bracknell Berkshire(GB)**

(72) Inventor: **Gill, Trevor Michael**
**14 Gordon Place**
**Reading Berkshire RG3 1LA(GB)**

(74) Representative: **Foster, David Martyn et al,**
**Mathisen, Macara & Co. The Coach House 6-8 Swakeleys**
**Road**
**Ickenham Uxbridge UB10 8BZ(GB)**

(54) **Duplex communications.**

(57) A system for providing duplex communications between two stations (2,4) is established by means of a voice encoder (12) which is capable of operating at distinct bit rates in dependence on whether or not there is an input voice signal to the voice encoder (12) and whether there is a received voice signal from the other station. The bit rate of the voice encoder (12) is controlled by a control unit (22) including a voice controlled switch. The control unit (22) outputs control data which is transmitted at a low bit rate to the other station. When only one party is speaking that party is allocated most of the channel bandwidth, until he is interrupted by the other party, in which case the channel bandwidth is equally divided between them until the first party stops talking when the other party is allocated most of the bandwidth available.

Croydon Printing Company Ltd

## DUPLEX COMMUNICATIONS

The present invention relates to a duplex communications system for digital communications over a channel such as a telephone line or radio link or a composite channel including sections using different transmission methods. The present invention is particularly, but not exclusively, suitable for use in a cellular radio telephone network or cordless telephone system.

In many applications of digital communications, the bandwidth available for a voice channel is extremely limited. In the public switched telephone network where digital transmissions are used, the voice signal is pulse code modulated onto a 64 kb/s channel. This provides an acceptable level of speech reproduction. For duplex transmission of a normal telephone conversation a 64 kb/s channel is needed for communication in each direction, i.e. a total bandwidth of 128 kb/s.

Where the bandwidth available for communications is extremely limited as in a cellular radio network environment where only relatively few frequency bands are available and channels have to be as closely spaced as possible, channel bandwidth must be kept to the minimum without any significant loss of the standard of reproduction.

Various techniques have been developed for bandwidth compression of the digital speech signal which depend on the use of appropriate coding techniques. For example by the use of continuously variable slope delta modulation rather than simple pulse code modulation, some reduction in the bandwidth required can be obtained.

GB - 1 440 047 describes a voice communications system which takes advantage of the fact that in a conversation both parties seldom speak simultaneously though it is necessary to have duplex communications to allow one party to interrupt the other. In this system apparent duplex communication between two stations each having a transmitter and receiver is provided by storing in the transmitter a voice signal to be transmitted alternately in two parallel analog stores, and converting in a delta modulator the data stored in one store into digital form at a variable conversion rate which is controlled by a speech detector, while the incoming signal is being stored in the other store. The delta modulator operates at a constant rate and the conversion rate is varied by adjusting the rate at which the stored signal is fed out from the store to the modulator. Similarly at the receiver the incoming voice data and preamble data relating to the conversion rate are alternately stored and the data from one store is decoded while the other is receiving incoming data.

A single channel is provided between the stations and this connects the receiver of one station to the transmitter of the other and vice versa alternately with a duty cycle which is varied in dependence on whether speech is being detected at the stations. This gives the effect of duplex communication although there is only transmission in one direction at any instant. By modifying the conversion rate for the voice signal it is possible to reduce the overall channel bandwidth required for full duplex transmission.

Such a system is disadvantageous in that it uses two distinct analog stores for storing the incoming signal to be transmitted. The rate at which the signal is fed out from the store has to be variable to vary the conversion rate. Such analog stores are complex and expensive and introduce a significant time delay into the system.

The present invention is directed towards solving the technical problem of reducing the bandwidth of a duplex digital voice communications channel whilst still providing an acceptable level of sound reproduction to the user.

The present invention accordingly provides a communications system providing duplex voice communications, comprising a pair of stations with a communications channel therebetween, means at each station for coding and transmitting and receiving and decoding digital transmissions, means at each station for sensing whether a voice signal is being input for coding and transmission, means at each station for sensing whether a voice signal is being received from the other station, and control means for adjusting the bandwidth used for transmission in each direction in response to the output of both said sensing means such than when a voice signal is both being transmitted and received the bandwidth used in each direction is substantially equal, and when there is a voice signal being transmitted in only one direction between the stations the bandwidth used in that direction is significantly greater than the bandwidth used in the reverse direction, characterised in that the coding and decoding means are adapted to operate at respective variable data rates, and said control means adjusts the data rates of said coding and decoding means to adjust the bandwidth.

This system is advantageous relative to the previously discussed prior art in that it is not necessary to store the incoming voice signal prior to coding. Moreover, as the coding means is capable of operating at different bit rates only relatively simple switching is required. The saving in bandwidth is achieved by varying the data transmission rate so that a slow, low-bandwidth coding rate is used where no voice is being transmitted along that channel.

The invention further provides a communications system for providing duplex communications for a plurality of user links between two stations over a fixed bandwidth, comprising means for receiving and transmitting digital voice signals at each station, characterised in that the system further comprises means for providing each station with data relating to the number of users and whether voice signals are being sent and in which direction on each link, and means for setting the data rate of a voice encoder for convertng the input voice signal into digital form at each station in dependence on the data provided such that each link direction carrying a voice signal is operating at a data rate sufficiently high to ensure reception.

A duplex communications system embodying the invention will now be described, by way of example only, with reference to the accompanying diagrammatic drawing which is a block diagram of the duplex communications system in accordance with the invention.

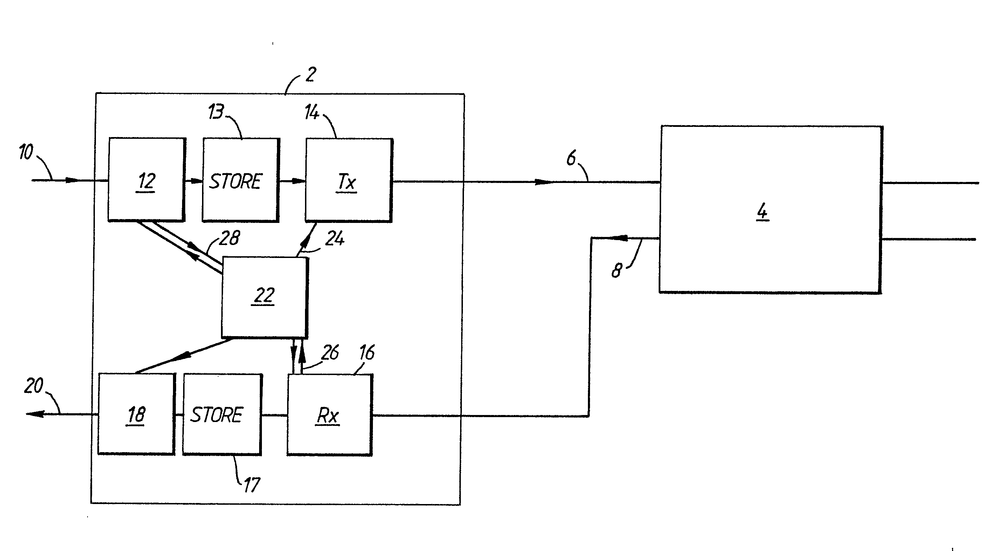

In the drawing two stations 2 and 4 are shown as being in duplex communications with each other by means of the channels 6 and 8. It should be understood that the stations 2 and 4 may represent the terminals of two subscribers to a cellular radio network or some other communications system where the bandwidth of the communications channel is limited. The link between the stations defined by channels 6 and 8 may be a radio or landline link or a combination of the two. It may also comprise a satellite or microwave link, either in whole or in part. It will be appreciated that the channels may not directly connect the two stations but may do so via a mobile switching centre or other exchange equipment. The channels 6,8 may be two distinct links at different frequencies or, preferably, be provided as a single time-division multiplexed (TDM) channel where each station transmits alternately for a brief period giving the effect of full duplex communications.

The two stations 2,4 are essentially identical in their structure and therefore only the station 2 will be described in detail.

A voice input to the station 2 is made on line 10 to a voice encoder 12 which converts the voice signal into a digital output using a suitable coding system. The encoder 12 may, for example, include a delta modulator. The output of the encoder is connected via a digital buffer store 13 to a transmitter 14 which transmits the digital signal using an appropriate form of modulation on the channel 6.

The receiver 16 receives and demodulates a digital signal received along channel 8 and feeds the signal via a digital buffer store 17 to a voice decoder 18 which produces a voice signal output along line 20.

As well as transmitting the digital voice signal, the communications channels 6,8 carry a small amount of control data. This is under the control of a control unit 22 which adds the control data to the output of the encoder. This control data may be supplied to the transmitter 14 via line 24. The control circuit 22 receives the control data received over channel 8 from the receiver 16 on line 26. The control unit 22 determines the bit rate of the voice encoder 12 and whether the output of the encoder is transmitted by means of a voice controlled switch which receives an input from the voice encoder 12 along line 28 or from the input line 10. The control unit 22 may also provide an indication of the transmit and receive channel bit rates to the transmitter and receiver respectively. The control unit 22 also controls the bit rate of the voice encoder 12 in dependence on control data received from the receiver 16.

The voice encoder 12 is adapted to operate on three distinct bit rates, a low stand-by bit rate for use when there is no detectable incoming signal along line 10, a maximum bit rate when there is an incoming signal along line 10 and no voice signal being received from the other station 4, and an intermediate bit rate for the case when both stations are transmitting a voice signal. The stand-by bit rate can be eliminated if it is provided that the output of the voice encoder is not transmitted if no input voice signal is detected by the voice controlled switch. The bit rate of the voice decoder 18 is controlled in a similar manner to that of the voice encoder 12 so as to be compatible with the bit rate of the voice encoder at the other station.

For a TDM channel the control unit 22 also controls the transmitter and receiver to produce an appropriate duty cycle between the stations. The transmission rate over the channel is always at a constant rate and the period of time during which each station transmits is proportional to the data rate of its encoder and thus on whether voice signals are being transmitted by one or both stations. If a voice signal is being transmitted in one direction only so that the voice encoder receiving that signal is operating at its maximum bit rate the associated transmitter transmits for most of the time with short periods during which the other transmitter transmits control data only. If voice signals are being transmitted in both direction the duty cycle becomes 50:50 and both voice encoders are operating at equal bit rates. The store 13 provides a buffer between the constant output of the voice encoder 12 and the intermittent output of the transmitter. Similarly the store 17 provides a buffer to store the intermittent input from the receiver to enable the voice decoder 18 to produce a continuous output.

An example of the operation of the described system will now be given in which it is assumed that the channels 6 and 8 are allocated to a single TDM channel with a capacity of 32 kb/s. The three possible bit rates provided for transmission along the channel 6 and 8 are 250 b/s which is made up of the control data and, optionally, a very low bit rate operation of the voice encoder 12, 16 kb/s which comprises 250 b/s of control data and the output of the voice encoder 12 operating at 15.75 kb/s and 31.75 kb/s per second which is made up of 250 b/s of control data and the voice encoder output operating at the maximum bit rate of 31.5 kb/s. When the voice encoder 12 in station 2 is operating at its maximum bit rate then the corresponding voice encoder in the other station 4 will be operating at its minimum bit rate or its output will not be passed to the transmitter. Similarly both voice encoders may operate at the intermediate bit rate of 15.75 kb/s. The transmitters always operate at 32 kb/s with a duty cycle of either 31.75:0.25, 50:50, or 0.25:31.75 depending on the data rates of the encoders.

In use, when the voice encoder is receiving no input signal, the voice controlled switch in control unit 22 detects no voice signal and therefore sets the bit rate of its associated voice encoder 12 to minimum or prevents transmission of its output. Therefore the only signal provided for transmission from the transmitter 14 is effectively the control data supplied by the control unit 22 at a rate of 250 b/s. If no voice signal is being input at either station then this 250 b/s control data is transmitted alternately in each direction with a 50:50 duty cycle. When a voice signal is received on line 10 at the other station, the voice signal input is detected by the voice controlled switch in control unit 22 which immediately increases the bit rate of the voice encoder 12 to the maximum 31.5 kb/s. The 250 b/s of control data is still provided. Thus the control units set the duty cycle so that the station transmitting a voice signal is transmitting for 31.75/32 of the time with periodic breaks during which the other station transmits control data for a period representing .25/32 of the available time, therefore using up the full 32 kb/s capacity of the channel.

If, while a voice signal is being transmitted from one station, a voice signal is detected in the input line 10 to the voice encoder 12 of the other station, this is detected by the voice controlled switch, which produces an output which is transmitted as control data to the other control unit to cause the other control unit to reduce the bit rate of its voice encoder 12 down to 15.75 kilobits per second and switch the duty cycle to 50:50. The output of the voice controlled switch also causes the control unit at the home station to control its voice encoder to operate at 15.75 kb/s and its transmitter and receiver to operate with a 50:50 duty cycle. Both voice encoders therefore operate at this intermediate bit rate until the voice signal input to one or other of them ceases. When this is detected by the voice controlled switch in the associated control unit, the bit rate of that voice encoder is dropped to its minimum level or its output ceases to be transmitted and the duty cycle is adjusted to 0.25:31.75. Control data is also transmitted to the other station which is acted upon by the other control unit to increase the bit rate of its voice encoder to maximum and adjust its duty cycle to 31.75:0.25, provided that the voice controlled switch at that station continues to detect an input voice signal. Similarly the rate of operation of the voice decoders 18 is set from the control units 22 using the transmitted control data.

Thus, during a telephone conversation, when only one party is speaking, that party has effectively the whole of a 32 kb/s channel and, to the users, the quality of communications is the same as if a full 64 kb/s channel had been provided with both channels operating at a maximum capacity of 32 kb/s. When the other party interrupts, there is a slight degradation in quality but, as both parties are speaking it is normally difficult for either of them to understand the other and therefore this decrease in speech quality will not normally be discernible, as the lower bit rate of the voice encoder still produces an acceptable speech quality. The situation where both parties are speaking simultaneously does not normally last for an extended period so that this degradation in quality is normally very brief.

The provision of fast operating voice controlled switches and the 250 b/s control data channel which is always open in both directions, allows a very fast response by the voice encoders at each station. This enables the delay between maximum bit rate operation of the voice encoder at one station and that at the other station to be kept to a minimum.

It has been observed that during telephone conversations there is frequently a relatively large period overall where neither party is speaking. In the arrangement described, the capacity of the channel in these periods is reduced to 0.5 kb/s which is used by the control data in each direction.

In an improvement to the described system, it is envisaged that the channel capacity available to a number of duplex communications links which run parallel over a part of their distance should be dynamically allocated. For example between, say, two exchanges, 10 duplex links may be required. This would normally in a prior art system require an overall channel capacity of 1280 kb/s. If operating in accordance with the above described example 320 kb/s of channel bandwidth is required. If only, say, 256 kb/s of overall channel capacity is available then the 10 duplex links can still be provided if the capacity is dynamically allocated between the links as described below.

It is probable that, during the 10 telephone conversations occupying this channel, at least two will be silent at any instant in time, therefore, provided the channel capacity is rapidly reallocated between the channels requiring the full 32 kb/s, no reduction in speech quality is detectable to the users. It is necessary to detect the onset of a voice signal in any particular transmission channel rapidly, as pauses are likely to be of only short duration. In order to do this the station, for example an exchange, at one end of the channel has a control unit adapted to receive the control data on each individual channel. Instead of the bit rate on the channel being set by reference to the requirements of a single duplex channel, the channel space is allocated in dependence on the capacity required by each of the 10 duplex channels. Thus the channel space is divided amongst the component channels carrying voice signals. The channel bit rates may each be changed as the number of active channels changes, alternatively the bit rates of some only of the channels may be decreased each time a new channel becomes active and vice versa when one stops carrying a signal. The latter scheme reduces the number of rate changes required.

In the described apparatus, the voice encoders have been designed to operate at two or three distinct speeds. In a variation, particularly where dynamic channel space allocation is being used on common parts of the link, it may be desirable for the voice encoders to have a continuously variable bit rate or intermediate levels of operation.

## CLAIMS

1.    A  communications system providing duplex voice communications,  comprising  a pair of stations  (2,4) with  a  communications  channel  (6,8)  therebetween, means  at  each  station (2,4)  for  coding  (12)  and transmitting (14) and receiving (16) and decoding (18) digital  transmissions,  means  (22) at  each  station (2,4)  for  sensing  whether a voice signal  is  being input for coding and transmission,  means (22) at each station  for  sensing whether a voice signal is  being received  from  the other station,  and  control  means (22) for adjusting the bandwidth used for transmission in  each  direction in response to the output  of  both said  sensing  means such than when a voice signal  is both being transmitted and received the bandwidth used in  each  direction is substantially equal,  and  when there is a voice signal being transmitted in only  one direction  between  the stations (2,4)  the  bandwidth used  in that direction is significantly greater  than the  bandwidth  used  in  the  reverse  direction, characterised  in  that the coding (12)  and  decoding (18)  means  are  adapted  to  operate  at  respective variable  data rates,  and said control means  adjusts the  data  rates  of said coding  and  decoding  means (12,18) to adjust the bandwidth.

2.    A system as claimed in Claim 1, characterised in that said communications channel (6,8) is a time division multiplexed channel (6,8) along which the transmittng means (14) of each station (2,4) alternately transmits for a period of time proportional to the data rate of its associated coding means under the control of said control means (22).

3.    A system as claimed in claim 1 or 2, characterised in that the coding means (12) comprises a voice encoder (12) having an input (10) for a voice signal, a digital store (13) connected to the output of said voice encoder (12) and connected to said transmitting means (14), and means (22,24) for adding to the output of the voice encoder control data from the control means (22), such that said stored data and said control data are transmitted by the transmitting means (14).

4.    A system as claimed in any one of the preceding claims, characterised in that the means (22) for sensing whether a voice signal is being input for transmission comprises a voice controlled switch.

5.    A system as claimed in any one of the preceding claims, characterised in that the means (22) for sensing whether a voice signal is being received receives information transmitted from the means (22) for sensing whether a voice signal is being transmitted at the other station over the communications channel itself.

6.    A communications system for providing duplex communications for a plurality of user links between two stations (2,4) over a fixed bandwidth, comprising means for receiving (16) and transmitting (14) digital voice signals at each station, characterised in that the system further comprises means for providing each station with data relating to the number of users and whether voice signals are being sent and in which direction on each link, and means (22) for setting the data rate of a voice encoder (12) for convertng the input voice signal into digital form at each station in dependence on the data provided such that each link direction carrying a voice signal is operating at a data rate sufficiently high to ensure reception.

7.    A system as claimed in claim 6, characterised in that each link direction carrying a voice signal carries data at a substantially equal bit rate and these combined bit rates represent substantially all of the available bandwidth.